# EUROPEAN PATENT SPECIFICATION

(11) **EP 3 372 073 B1**
(45) Date of publication and mention of the grant of the patent: **17.06.2020**
(21) Application number: 18160605.4
(22) Date of filing: 07.03.2018
(51) Int. Cl.: A01K 61/50, A01K 61/59

(54) **DEVICE AND PROCESS FOR FIXATION OF LARVAE AND GROWTH OF JUVENILES OF THE STALKED BARNACLE POLLICIPES POLLICIPES**
VORRICHTUNG UND VERFAHREN ZUR FIXIERUNG VON LARVEN UND ZUM WACHSTUM VON JUNGTIEREN DER STACHELMUSCHEL POLLICIPES POLLICIPES
DISPOSITIF ET PROCÉDÉ DE FIXATION DE LARVES ET DE CROISSANCE DE JUVÉNILES DE POUCE-PIEDS

(30) Priority: 09.03.2017 PT 2017109956
(43) Date of publication of application: 12.09.2018
(73) Proprietor: Universidade de Évora, 7000-803 Évora (PT)
(72) Inventor: CRUZ, Teresa, 7520-266 Sines (PT); JACINTO, David, 2785-632 S. Domingos de Rana (PT); FERNANDES, Joana, 7520-182 Sines (PT); SEABRA, Maria, 7520-239 Sines (PT); SILVA, Teresa, 7520-314 Sines (PT); CASTRO, João, 7520-266 Sines (PT)
(74) Representative: Oliveira Lourenço, Nuno Miguel

(56) References cited:
- EP-A1- 1 466 524
- FR-A- 1 603 821
- FR-A1- 3 037 624

## Description

### Technical domain of the invention

The present invention relates to a device for larval attachment and growth of juveniles of the stalked barnacle *Pollicipes pollicipes* and to the respective process of larval attachment and development of juveniles of this species. Said process involves larval attachment to the proposed device followed by metamorphosis, survival and growth of juveniles of *P*. *pollicipes* in a natural or artificial substrate.

Thus, the present invention is in the area of aquaculture.

### Background of the invention

The stalked barnacle *Pollicipes pollicipes* is a cirripede crustacean that presents several features that give this marine species a high interest for aquaculture: a) it is a highly appreciated seafood in Portugal and Spain (Sousa et al., 2013; Molares e Freire, 2003; Rivera, 2015); b) it has a high sale price, reaching up to 200 euros per kg; c) occurs in very exposed shores, so that the exploitation activity can be very dangerous and is influenced by the sea conditions; d) there are periods of the year when demand is higher than supply (ex.: Christmas); e) the state of this resource presents a negative trend in Portugal (data of 2013, Cruz et al., 2015); f) it has the potential to be cultured in an ecologically sustainable way; g) it is situated in a low trophic level, so it has low energy requirements.

However, there are no known cases of success of aquaculture of this species or of other species of the genus *Pollicipes* (*P. polymerus* occurring on the west coast of North America; *P*. *elegans* found on the west coast of Mexico to Peru; and *P*. *caboverdensis,* endemic species of Cape Verde islands). In spite of all species of barnacles of the genus *Pollicipes* being exploited, *P. pollicipes* can be considered the most important economic resource of the rocky intertidal zone of northern Spain and mainland Portugal (Cruz et al., 2015).

*P. pollicipes* presents a life cycle constituted by a free-living larval phase (six stages *nauplius* and one stage *cypris*) and by a benthic phase in which the individuals are attached to a hard substrate (ex.: conspecifics, other barnacle species, rock). The last larval phase, *cypris*, attaches to a hard substrate (ex.: conspecifics, rocks) and undergoes a metamorphosis, resulting in a juvenile barnacle form. Larval attachment and the consequent recruitment may be very intense on conspecifics.

Current cases of aquaculture with cirripede crustaceans are known with barnacles of the species *Austromegabalanus psittacus* ("picoroco") in Chile (Lopez et al., 2012), and there have been experimental studies to cultivate the Azorean barnacle (*Megabalanus azoricus*) (Pham et al., 2011).

In both species, culture is based on a production model dependent on the natural process of larval attachment / recruitment on artificial substrates. The use of a similar production model with *P. pollicipes* was considered in the past as limited / unfeasible by failure of larval attachment / recruitment of barnacles on artificial substrates located in nature (Cruz 2000; Franco, 2014).

In the only known attempt to produce *P. pollicipes* in the wild, barnacles attached to pieces of rock were transplanted to a floating system and were grown under permanent immersion conditions (Goldberg, 1984). However, this technique involves the exploitation of barnacles with commercial interest and implies the destruction of their natural habitat. Accordingly, the present invention aims to solve a longstanding problem related to the production of this crustacean, namely in the early stages of its life cycle, in particular the attachment of the cyprid to a substrate, essential for the first phase of its production, and subsequent larval metamorphosis, survival and growth of juveniles, another important stage in the production of barnacles by implementing a device and a process for barnacle production. This is achieved by a device according to claim 1, by a process according claim 2 and by a method of use according to claim 5.

EP1466524A1 discloses a device and method for rearing mollusk such as mussels. FR1603821 discloses a device for harvesting mollusk spat. Document FR3037624A1 discloses an expansible device for being inserted in a wall to receive a screw.

The implementation of the device of the present invention has shown that it is possible to attach larvae and develop juvenile barnacles in habitats where this is not possible under natural conditions.

### General description of the invention

As previously mentioned, the present invention relates to a device for larval attachment and development of juveniles of *P. pollicipes* on a natural or artificial substrate, as well as to the process of larval attachment and juvenile development of this species.

### Description of the figures

Figure 1. Illustration of a preferred embodiment of the device according to the present invention, wherein:
   1. represents the main element with a substantially cylindrical form meant to be inserted on a natural or artificial substrate;
   2. represents the fastening means of attachment to the main element (1);
   3. represents the upper end of the device;
   4. represents the lower end of the device.
**Figure 2****.** Illustration of a preferred embodiment of the invention, wherein:
   (I) represents the selected area for placing the device of the invention (1 and 2) in the natural habitat of barnacles (3) in the rocky shore (figure 2I);
   (II) represents the required drilling at the chosen location for insertion of the device of the invention;
   (III) represents the larval attachment and growth / development of juveniles of *P. pollicipes* (5) onto the device of the invention;
   (IV) represents the collection and removal of the device from the substrate (3) where it is inserted, comprising essentially juveniles of *P. pollicipes* and, optionally, its transfer to other locations.

### Characterization of the device of the invention

The device for larval attachment and growth of juveniles of *P*. *pollicipes* comprises at least one main element (1) having an essentially cylindrical shape and the fastening means (2) to the main element (1).

The essentially cylindrical element (1) has external roughness and is approximately of the size of a medium-sized peduncle of *P. pollicipes.*

The main element (1) has a diameter of about 6 to 15 mm and an approximate length of 20 to 60 mm, suitable for attachment of larvae and development of barnacle juveniles, more preferably has a diameter of about 8 mm and a length of about 38 mm.

The main element (1) has a lower diameter at the lower end than at the upper end so as to facilitate insertion of the lower end into a selected substrate.

The main element (1) may be constructed of various types of materials, however, being plastic the preferred material because of its low cost, easy to obtain and to be inert in the environment. Additionally, this material may be able to be coated or not with other materials. Preferably, the plastic material is nylon.

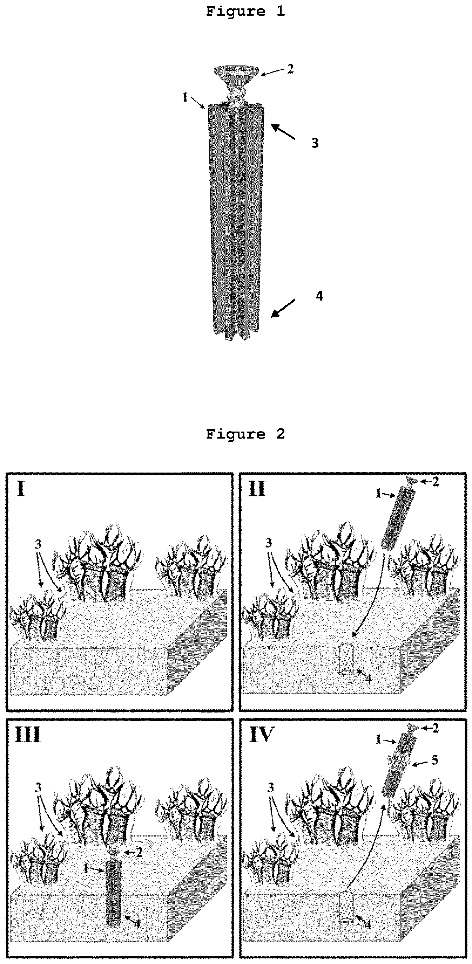

Therefore, the essentially cylindrical main element (1) has an appearance of a plug with longitudinal grooves with a diameter of about 8 mm and length of about 38 mm, as shown in (1) in figure 1.

In addition, the essentially cylindrical main element (1) is suitable for insertion into a substrate that might be artificial or natural, such as, for example, bituminous constructions or natural rocks, preferably positioned or located in areas suitable for attachment of larvae, and development and growth of juveniles of *P. pollicipes.*

The fastening means (2) to the main element (1) being a screw or something having a similar structure, is inserted at least partially into the element (1) so that a tool can be used (such as pliers, hammer) to collect the device, which is inserted into the substrate.

The fastening means (2) correspond to a stainless steel screw having a diameter of 4 mm and a length of 40 mm, and with flat head countersunk, as shown in figure 1 (2).

### Characterization of the process for larval attachment and development of juveniles of P. pollicipes

The process of larval attachment and development of juveniles of *P. pollicipes* according to the present invention preferably starts with (I) choosing an area for placement of the device of the invention (1 and 2) in a habitat favourable to larval attachment and development of juveniles, preferentially in a natural habitat type of *P. pollicipes* (3), for example, in the rocky shore (Figure 2I).

In (II) the required drilling is performed at the chosen location for insertion of the device of the invention, described above, into the bore of the substrate, such as a rock (4). The insertion of the device is made in such a way so that the lower end of the main element (1) is well inserted and fixed in the hole, and that the upper end, which has the fastening means (2), for example a screw or a similar structure partially inserted in (1), is above the substrate level thereby ensuring that the device can be easily removed, for example with the aid of a pliers or a hammer (Fig. 2II).

In (III) occurs the fixation of the larvae to the device of the invention and, later, also the growth of juveniles (5). The permanence of the device at the location (3) includes preferably, in a partial or total manner, the most important natural period of larval settlement and recruitment of *P*. *pollicipes,* such as Summer and Autumn, in the case of the coast of the Iberian Peninsula (figure 2III).

In (IV) the device is collected and removed from the selected location (3), with its possible further transference to other surfaces where a compatible hole has been made (Figure 2IV).

Thus, in general, the process of the present invention comprises the following steps:
- insertion of a device according to a first aspect of the present invention into a substrate at a location suitable for larval attachment and growth of juveniles of *P*. *pollicipes*;
- collection of the device of the invention together with the juveniles and possibly some attached cyprids in a time frame according to the purpose of the next step, be it to reach the adult stage of this crustacean or only to collect for other purposes, such as ecological studies.

These devices have a low production cost as well as an easy implementation in the selected locations, and their use is simple and efficient, not involving the exploitation of *P*. *pollicipes,* with commercial value, in their natural habitat.

On the other hand, both the holes where the various devices are placed, such as the devices themselves, can be reused in the same process and for several years.

The device and process of the invention have possible applications in the field of aquaculture and of aquariophilia, as they successfully enable to obtain cyprids and juveniles of *P. pollicipes* and to transplant them into diversified culture systems.

In addition, the present invention may also be applied in various areas of scientific research. The use of cyprids and juveniles of *P. pollicipes,* fixed onto various devices in various laboratory tests, allows to have more comparable sampling units, namely by using individuals of a known maximum age.

On the other hand, the invention also has wide application in ecological studies of this species, such as larval attachment and barnacle recruitment, allowing the variation of recruitment to be studied in various locations or at certain periods, in an identical and comparable manner among locations and among periods.

Recruitment of *P. pollicipes* has been studied by the scientific community through the counting or frequency of cyprids and juveniles that are attached to conspecifics (see Cruz et al., 2010). The use of this type of device means that it is not necessary to pick up adult barnacles to count the larvae and juveniles that have settled.

Finally, this device has potential application in the conservation of this species through the recovery of much exploited areas by introduction of devices in these areas (with or without attached barnacles) and consequently promoting a greater recruitment.

### Bibliography

Cruz, T., 2000. Biologia e ecologia do percebe *Pollicipes pollicipes* (Gmelin, 1790) no litoral sudoeste português. Dissertação apresentada a Universidade de Évora para a obtenção do grau de Doutor em Biologia Marinha.
Cruz, T., Castro, J. J., & Hawkins, S. J. (2010). Recruitment, growth and population size structure of Pollicipes pollicipes in SW Portugal. Journal of Experimental Marine Biology and Ecology, 392(1-2), 200-209.
Cruz, T., Jacinto, D., Sousa, A., Penteado, N., Pereira, D., Fernandes, J.N., Silva, T., Castro, J.J., 2015. The state of the fishery, conservation and management of the stalked barnacle Pollicipes pollicipes in Portugal. Marine Environmental Research, 112 (B): 73-80.
Franco S., 2014. Aquaculture of stalked barnacles (Pollicipes pollicipes). PhD thesis in Marine Science, Newcastle University, Newcastle Upon Tyne (UK), 218pp.
Goldberg, H., 1984. Posibilidades de cultivo del percebe, Pollicipes cornucopia Leach, en sistemas flotantes. Informe Técnico. Instituto Español de Oceanografía, 19, 1- 13.
López, D.A., López, B.A., Pham, C.K. e Isidro, E.J., 2012. Potency of Barnacle in Aquaculture Industry, Aquaculture, Dr. Zainal Muchlisin (Ed.),
Molares, J., & Freire, J., 2003. Development and perspectives for community-based management of the goose barnacle (Pollicipes pollicipes) fisheries in Galicia (NW Spain). Fisheries Research, 65(1-3), 485-492.
Pham, C.K., 2011. Recruitment and growth of Megabalanus azoricus (Pilsbry, 1916) on artificial substrates: first steps towards comercial culture in the Azores. Arquipelago. Life and Marine Sciences 28:47- 56.
Rivera, A., 2015. Sustainability of the gooseneck barnacle fishery in Asturias: trends, drivers and lessons. PhD thesis. PhD program of Biological Resources and Biodiversity. Universidad de Oviedo, Spain. 130pp.
Sousa, A., Jacinto, D., Penteado, N., Martins, P., Fernandes, J., Silva, T., Castro, J.J. and T. Cruz, 2013. Patterns of distribution and abundance of the stalked barnacle (Pollicipes pollicipes) in the central and southwest coast of continental Portugal. Journal of Sea Research, 83: 187-194

## Claims

1. A device for barnacle larvae fixation and development of barnacle juveniles, comprising:
- a main element (1) having a substantially cylindrical shape, with a rough outer surface, approximately the dimensions of a medium-sized barnacle peduncle, thus promoting the attachment of larvae and juvenile development; and
- fastening means (2) to the element (1), which is partially inserted into the element (1),
wherein:
- the main element (1) has a diameter of approximately 6 to 15 mm and a length of approximately 20 to 60 mm, preferably a diameter of approximately 8 mm and an approximate length of 38 mm;
- the main element (1) is made of plastic preferably nylon;
- the main element (1) is a plug having longitudinal grooves along the whole length, of the main element (1) such that the main element (1) has a star shaped transversal section;
- the main element (1) has the upper end diameter larger than the lower end diameter;
- the fastening means (2) is a stainless-steel screw with a diameter of 4 mm and a length of 40 mm, and with a countersunk flat head.

2. A process for the attachment of larvae and the development of juvenile barnacles, **characterized in that** it comprises the following steps:
a) insertion of a device as described in claim 1 into a substrate and location suitable for larval fixation and juvenile development purposes; and
b) collection of the device referred in (a) together with the fixed larvae and developed juveniles of barnacle.

3. Process according to claim 2, **characterized in that** the substrate is a natural rocky substrate.

4. Process according to any one of claims 2 or 3, **characterized in that** the device as described in claim 1 and/or the previously made holes are reusable.

5. Use of a device as described in claim 1, **characterized in that** it is applied in promoting the attachment of larvae and/or the development of juvenile barnacles.

## Patentansprüche

1. Ein Gerät zur Fixierung von Seepockenlarven und Entwicklung von Seepockenjungen umfassend:
- ein Hauptelement (1) habend eine wesentlich zylindrische Form, mit einer harten Außenoberfläche, ungefähr die Dimensionen eines mittelgroßen Seepockenstiels, somit fördernd die Anhaftung von Larven- und Jungentwicklung, und
- Befestigungsmittel (2) an das Element (1), welches teils in das Element (1) eingesetzt ist,
wobei:
- das Hauptelement (1) ein Durchmesser von ungefähr 6 bis 15 mm und eine Länge von ungefähr 20 bis 60 mm hat,
- vorzugsweise ein Durchmesser von ungefähr 8 mm und eine ungefähre Länge von 38 mm,
- das Hauptelement (1) aus Kunststoff, vorzugsweise Nylon, gemacht ist;
- das Hauptelement (1) ein Stecker ist, habend Längsrillen entlang der ganzen Länge des Hauptelements (1), definierend eine achteckig ebenflächige Form von genanntem Hauptelement (1) so, dass das Hauptelement (1) einen sternförmigen Querschnitt hat,
- das Hauptelement (1) den Durchmesser des oberen Endes größer als den Durchmesser des unteren Endes hat,
- das Befestigungsmittel (2) eine Edelstahlschraube mit einem Durchmesser von 4 mm und eine Länge von 40 mm und mit einem flachen Senkkopf ist.

2. Ein Verfahren zur Anhaftung von Larven und Entwicklung von Jungseepocken **dadurch gekennzeichnet, dass** es folgende Schritte umfasst:
a) Einsetzung eines Gerätes gemäß Anspruch 1 in ein Substrat und Stelle passend zu Larvenfixierungs- und Jungentwicklungszwecken und
b) Ansammlung des Gerätes in (a) zusammen mit den fixierten Larven und entwickelten Seepockenjungen.

3. Verfahren gemäß Anspruch 2 **dadurch gekennzeichnet, dass** das Substrat ein natürliches Steinsubstrat ist.

4. Verfahren gemäß einer der Ansprüche 2 oder 3 **dadurch gekennzeichnet, dass** das Gerät wie beschrieben in Anspruch 1 und/ oder die vorher gemachten Löcher wiederverwendbar sind.

5. Verwendung eines Gerätes gemäß Anspruch 1 **dadurch gekennzeichnet, dass** es zur Förderung der Anhaftung von Larven und/ oder der Entwicklung der Jungseepocken angewendet ist.

## Revendications

1. Dispositif de fixation de larves en balanes et développement de juvéniles en balanes, comprenant :
- un élément principal (1) ayant une forme substantiellement cylindrique, avec une surface extérieure rugueuse, aux dimensions approximatives d'un pédoncule de balane de moyenne taille, favorisant ainsi l'attachement de larves et le développement juvénile et
- des moyens de fixation (2) à l'élément (1) qui est partiellement inséré dans l'élément (1),
où :
- l'élément principal (1) a un diamètre de 6 à 15 mm approximativement et une longueur de 20 à 60 mm approximativement,
- de préférence, un diamètre de 8 mm, approximativement et une longueur de 38 mm approximativement,
- l'élément principal (1) est fait de plastique, de préférence en nylon ;
- l'élément principal (1) est une prise ayant une rainure longitudinale le long de toute la longueur de l'élément principal (1) définissant une forme plane octogonale dudit élément principal (1) de telle manière que l'élément principal (1) a une section transversale en forme d'étoile,
- l'élément principal (1) a un diamètre de l'extrémité supérieure plus grand que le diamètre de l'extrémité inférieure,
- le moyen de fixation (2) est une vis en acier inoxydable d'un diamètre de 4 mm et d'une longueur de 40 mm et avec une tête plate fraisée.

2. Processus pour l'attachement de larves et le développement de balanes juvéniles, **caractérisé par le fait qu'**il comprend les étapes suivantes :
a) insertion d'un dispositif tel que décrit dans la revendication 1 dans un substrat et un endroit adapté à la fixation larvaire et aux fins de développement juvénile et
b) collecte du dispositif mentionnée en (a) conjointement avec les larves fixées et les juvéniles développés de balanes.

3. Processus selon la revendication 2, **caractérisé par le fait que** le substrat est un substrat rocheux naturel.

4. Processus selon une quelconque revendication 2 ou 3, **caractérisé par le fait que** le dispositif tel que décrit dans la revendication 1 et/ou les trous faits antérieurement sont réutilisables.

5. Usage d'un dispositif tel que décrit dans la revendication 1, **caractérisé par le fait qu'**il est appliqué pour favoriser l'attachement de larves et/ou pour développer les balanes juvéniles.
